Europäisches Patentamt

European Patent Office

Office européen des brevets

(11) Publication number : **0 479 484 A1**

# (12) EUROPEAN PATENT APPLICATION

(21) Application number : **91308747.4**

(22) Date of filing : **25.09.91**

(51) Int. Cl.⁵ : **G11B 15/43**

(30) Priority : **29.09.90 JP 261201/90**

(43) Date of publication of application :
**08.04.92 Bulletin 92/15**

(84) Designated Contracting States :
**DE FR GB**

(71) Applicant : **KABUSHIKI KAISHA TOSHIBA**
**72, Horikawa-Cho Saiwai-ku**
**Kawasaki-shi Kanagawa-ken (JP)**

(72) Inventor : **Hisadomi, Susumu, c/o Intellectual**
**Property Div.**
**Toshiba Corporation, 1-1-1, Shibaura**
**Minato-ku, Tokyo (JP)**
Inventor : **Ueda, Yoshifumi, c/o Intellectual**
**Property Div.**
**Toshiba Corporation, 1-1-1, Shibaura**
**Minato-ku, Tokyo (JP)**
Inventor : **Fukuta, Motoji, c/o Intellectual**
**Property Div.**
**Toshiba Corporation, 1-1-1, Shibaura**
**Minato-ku, Tokyo (JP)**

(74) Representative : **Muir, Ian R. et al**
**HASELTINE LAKE & CO. Hazlitt House 28**
**Southampton Buildings Chancery Lane**
**London WC2A 1AT (GB)**

(54) Tape reel driving apparatus for magnetic tape recorder.

(57) A tape reel driving apparatus for a magnetic tape recorder which includes a sliding friction coupler (217, 223, 225) provided in a power transmission path from a motor output shaft to a tape reel shaft (3), a detector for detecting a diameter of a tape wound on a tape reel and a controller for controlling the degree of the power transmission of the sliding friction coupler in response to the diameter of the tape detected by the diameter detecting means.

FIG. 5

EP 0 479 484 A1

The present invention relates to a magnetic tape recorder, and more particularly to a tape reel driving apparatus for a magnetic tape recorder.

In general, in a magnetic recording/reproducing apparatus such as a video tape recorder, it is required to maintain a tape tension within a proper range when a tape runs within a proper range in order to control a contact force of the tape against a magnetic head. The tape tension within the proper range is also desired to protect the tape from being damaged.

In a conventional tape recorder, there is a device with a combination of movable posts and a band brake for adjusting tape tension. In the device, the movable posts causes a pressure to the tape. The band brake varies a damping force to a tape reel in combination with the movable posts.

The conventional device is normally used in a normal running speed of the tape, such as a recording mode or a reproducing mode. However it is not able to be used in a fast running speed of the tape, such as a fast reproducing mode, a fast forward winding mode, a fast reverse reproducing mode or a reverse winding mode.

There is also available a tape tension adjusting device using a reel drive motor. This device is capable of adjusting a motor torque by varying a current supplied to the motor. In this case, the tape tension becomes nearly equal to a value which is given by dividing the motor torque by a reel diameter. Further, an objective value of the tape tension is obtained by detecting a diameter of the tape on a take-up reel and a tape thickness.

This type of the tape tension adjusting device is, however, used for relatively expensive high class tape recorders but not used for regular tape recorders such as home-use tape recorders.

As described above, on such home-use video tape recorders except those using a reel drive motor, a tape tension is normally not controlled in the reverse running of the tape (reproducing).

Therefore, when the tape is driven by a capstan motor, if the diameter of the tape on the take-up reel becomes large, the tape tension decreases and on the other hand, if it becomes small, the tape tension increases.

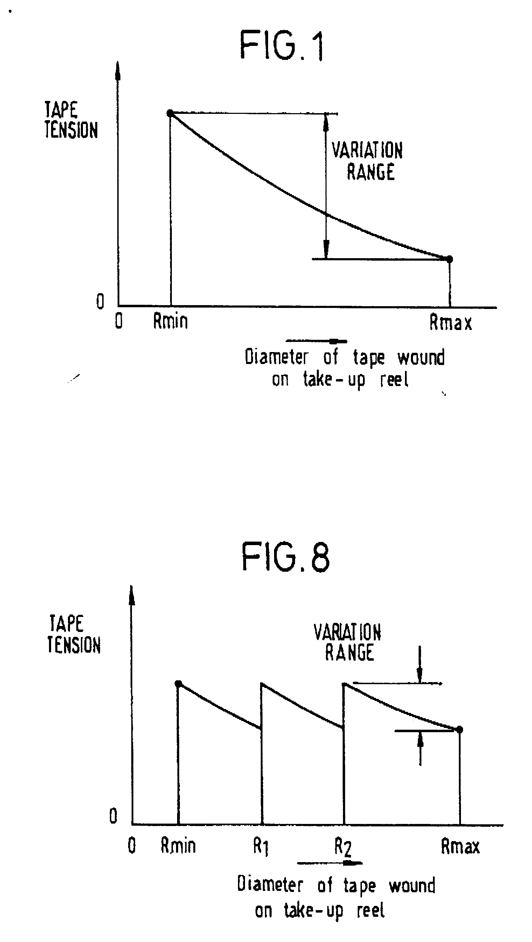

Shown in FIGURE 1 is a graph showing the relation between the diameter of the tape on the take-up reel (referred to as tape winding diameter hereafter) and tape tension wherein the graph indicates a large variation in tape tension existing between the minimum tape winding diameter Rmin and the maximum tape winding diameter Rmax.

In such a case where a tape tension varies, if a tape tension decreases closely to its lower limit, such troubles as deterioration of picture quality are caused because the upper limit of the tape tension is set within the range where a tape is not damaged.

The present invention therefore seeks to provide a tape reel driving apparatus of a magnetic tape recorder which is capable of controlling a tape tension in any mode of the tape running, such as the normal speed running, the fast speed running, without using a reel drive motor.

The tape reel driving apparatus for a magnetic tape recorder according to the present invention includes a sliding friction coupler provided in a power transmission path from a motor output shaft to a tape reel shaft, a detector for detecting a diameter of a tape wound on a tape reel and a controller for controlling the degree of the power transmission of the sliding friction coupler in response to the diameter of the tape detected by the diameter detecting means.

For a better understanding of the present invention reference will now be made by way of example to the accompanying drawings, wherein:

FIGURE 1 is a graph showing the relation between the reel take up diameter and a tape tension in the conventional tape recorder;

FIGURE 2 is a plan showing the construction of the essential parts of the magnetic tape recorder involved in one embodiment of the present invention;

FIGURE 3 is a front view of the essential parts of the magnetic tape recorder;

FIGURES 4 to 6 are cross-sectional schematic diagrams around the tape reel driving apparatus 200;

FIGURE 7 is a block diagram illustrating the construction of the reel driving torque controller; and

FIGURE 8 is the graph showing the relation between the reel take up diameter and a tape tention in this embodiment.

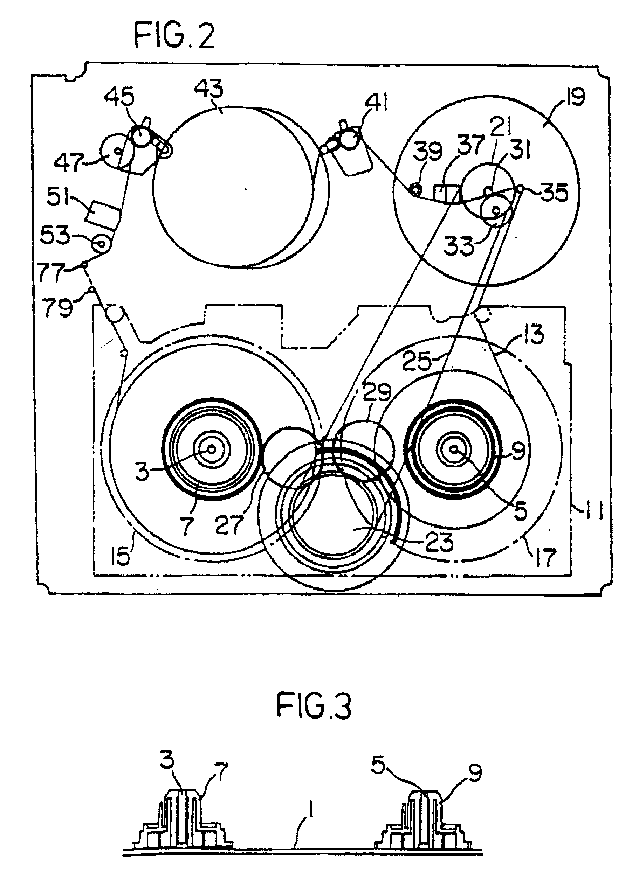

The present invention will be described in detail with reference to the FIGURES 2 to 8.

Referring now to FIGURE 2, an embodiment of the tape reel driving apparatus for magnetic tape recorder according to the present invention will be described in detail. The embodiment of the tape reel driving apparatus will be explained in detail hereinafter in taking a cassette tape recorder as an example of the magnetic tape recorder.

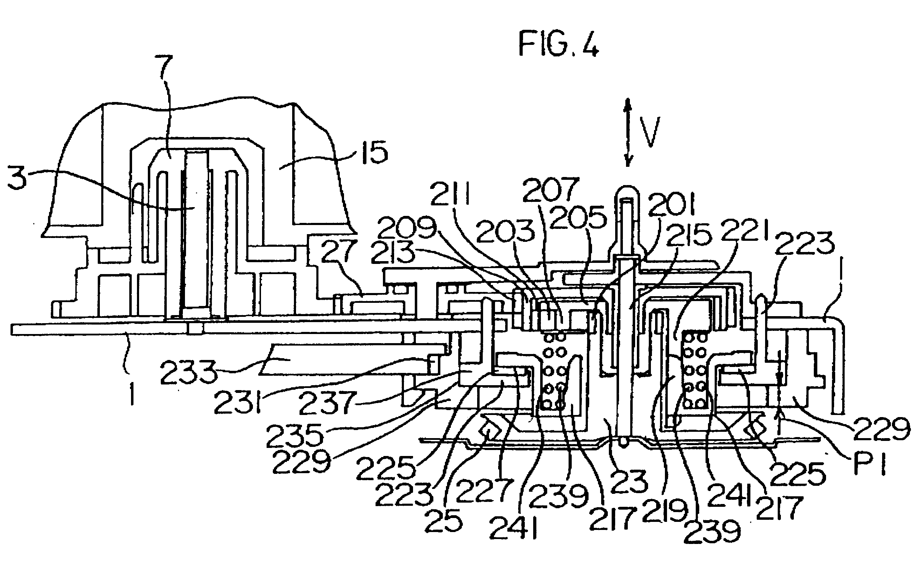

FIGURE 2 is a plan of the magnetic tape recorder according to one embodiment of the present invention, FIGURE 3 is its elevation. FIGURES 4, 5 and 6 are cross-sectional views showing the construction of the tape reel driving apparatus.

Further, FIGURE 2 shows the magnetic tape recorder in which a cassette 11 is inserted and a tape 13 is pulled out of this cassette 11.

As shown in FIGURE 2, a supply side shaft 3 and a take up side shaft 5 are mounted on a main base 1, a supply side reel turntable 7 is provided around the supply side shaft 3 in the rotatable state and a take up side reel turntable 9 is provided around the take up side shaft 5. The cassette 11 has a supply side reel 15 and a take up sode reel 17.

The main base 1 is provided with a motor 19 which rotates a pulley 21 and a capstan 31.

A belt 25 is driven between the pulley 21 and a follower pulley 23 which is provided on the main base 1. The follower pulley 23 engages with a supply side idler gear 27 and a take up side idler gear 29.

During a recording mode or a reproducing mode, the motor 19 rotates so that a motor torque of this motor 19 is transmitted to the supply side reel turntable 7 via the pulley 21, the belt 25, the follower pulley 23 and the supply side idler gear 27 to rotate the supply side reel turntable 7.

Further, the motor torque of the motor 19 is also transmitted to the take up side reel turntable 9 via the take up side idler gear 29 to rotate the take up side reel turntable 9.

When the supply side reel turntable 7 and the take up side reel turntable 9 are driven, the supply side reel 15 and the take up side reel 17 in the cassette 11 are also rotated.

The capstan 31 transmits the motor torque of the motor 19 to the tape 13 to run the tape 13 while the pinch roller 33 presses the tape 13 against the capstan 31.

A magnetic head, e.g., an AC/AE head 37 records an audio signal and a control signal.

Posts 35, 39, 53 and 79 route a tape path from the supply side reel 15 to the take up side reel 17 through the AC/AE head 37.

A take up side slider 41 and a supply side slider 45 wind the tape 13 round a drum 43 having a rotary head for recording/reproducing a video signal on/from the tape 13.

An impedance roller 47 suppresses a vibration of the tape 13. An erase head 51 is provided for erasing recorded signals from the tape 13 if desired.

As shown in FIGURE 4, the motor torque of the motor 19 is transmitted to the follower pulley 23 and to a planetary gear 203 via a sun gear 201 of the follower pulley 23.

Two pieces of the planetary gear 203 are provided to a holder 205 and are able to rotate around a shaft 207.

Rotation of the planetary gear 203 is transmitted to an internal gear 211 of a double-gear arrangement 209 and then is transmitted to the idler gear 27 via an external gear 213. The rotation of the idler gear 27 is transmitted to the supply side reel turntable 7 and the supply side reel 15.

On the other hand, the holder 205 is rotatable on the same axis of a shaft 215 and the rotation of the holder 205 is the orbital motion of the planetary gear 203.

A pawl 219 of a first clutch plate 217 engages with a pawl 221 of the holder 205 so that both of the first clutch plate 217 and the holder 205 cannot be able to rotate independently. Thus the rotation of the holder 205 is transmitted to the first clutch plate 217.

The first clutch plate 217 is able to slide in the vertical direction V. The first clutch plate 217 contacts with a felt 225 fixed on a second clutch plate 223 at a face contact (see a face 227). The second clutch plate 223 cannot rotate but is able to slide in the vertical direction V.

A cam 229 positions the second clutch plate 223. In receipt of the rotation of a cam driving gear 233 from its gear 231, the cam 229 turns on the same axis of the shaft 215. A cam portion 235 of the cam 229 is in contact with a boss 237 on the second clutch plate 223 so that the second clutch plate 223 moves up and down according to the rise and fall on the cam portion 235.

The first clutch plate 217 is frictionally in contact with the felt 225 on the second clutch plate 223 by the reaction force of springs 239 and 241 and therefore, its damping quantity (friction torque) is proportional to the contraction amounts of the springs 239 and 241.

As the contraction amounts of the springs 239 and 241 are given as displacements of the clutch plates 223 and 217 in the vertical direction V, it becomes possible to control the damping quantity to the rotation of the first clutch plate 217 (the orbital motion of the planetary gear 203) by the rotational displacement of the cam 229 which moves the second clutch plate 223 in the vertical direction V.

On such a tape reel driving apparatus, a torque proportional to the damping force to the orbital motion of the planetary gear 203 is output to the double-gear arrangement 209.

FIGURES 4, 5 and 6 are the operating status diagrams of the reel when its take up radius is large, medium and small, respectively.

FIGURE 4 shows the status where the cam portion 235 of the cam 229 is in the lowest position P1 and the springs 239 and 241 have been fully expanded. In this case, therefore, the friction torque acting on the first clutch plate 217 is at its smallest and the reel turntable driving torque is also at its smallest.

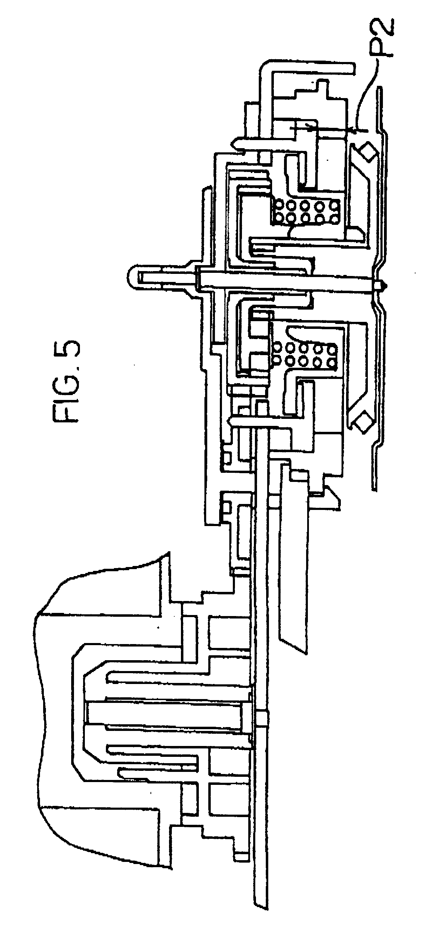

FIGURE 5 shows the status where the cam portion 235 of the cam 229 is at the medium position P2 and the springs 239 and 241 have been moderately contracted. In this case, therefore, the friction force torque acting on the first clutch plate 217 is moderate and the reel turntable driving torque is also moderate.

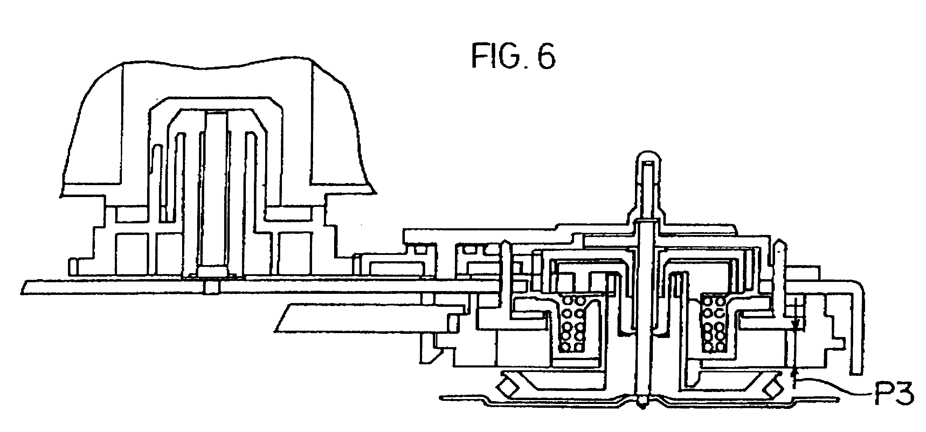

FIGURE 6 shows the status where the cam portion 235 of the cam 229 is at the highest position P3 and the springs 239 and 241 have been most contracted. In this case, therefore, the friction torque acting on the first clutch plate 217 is maximum and the reel turntable driving torque is also maximum.

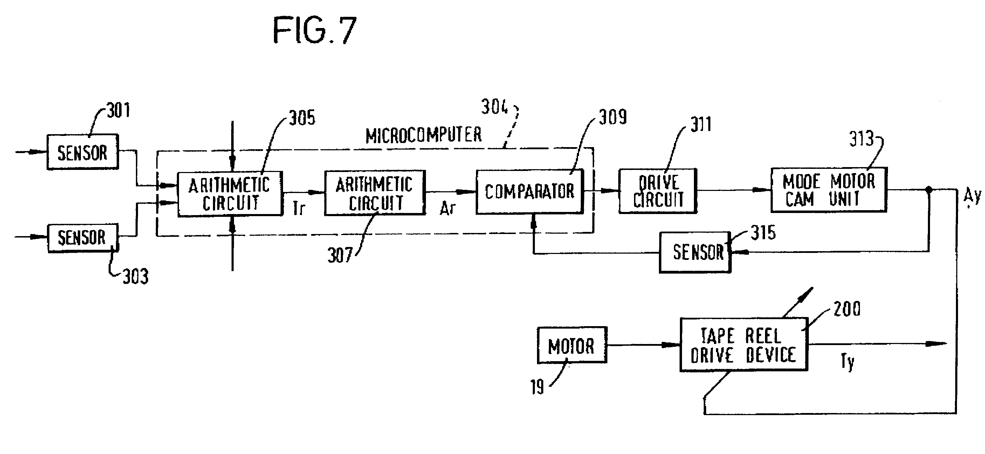

FIGURE 7 is the block diagram showing the construction of the reel driving torque controller using a tape reel drive device 200 described above.

This reel driving torque controller consists of sensors 301 and 303, arithmetic units 305 and 307, a comparator 309, a drive circuit 311, a mode motor cam unit 313, a sensor 315, the motor 19 and the tape reel drive device 200. The functions of the arithmetic units 305 and 307, and the comparator 309 are achieved by a microcomputer 304.

The sensor 301 detects the rotation speed of the supply side reel turntable 9 and transmits a pulse train corresponding to the detected rotation speed to the arithmetic unit 305.

The sensor 303 detects the rotation speed of the take up side reel turntable 9 and transmits a pulse train corresponding to the detected rotation speed to the arithmetic unit 305.

The arithmetic unit 305 calculates an objective torque Tr using the rotating speed of the supply side reel turntable 7 and the rotating speed of the take up side reel turntable 9, a tape thickness sent from the select switch which is not shown, and the tape carrying speed obtained from the motor sensor of the capstan 31.

The arithmetic unit 307 calculates an objective cam angle Ar, which is the turning angle of the cam 229, corresponding to the objective torque Tr.

The comparator 309 compares the objective cam angle Ar with the output signal from the sensor 315.

The drive circuit 311 sends current corresponding to the output from the comparator 309 to the mode motor cam unit 313.

The mode motor cam unit 313 is a device to turn the cam 229 and the cam angle output Ay of the cam 229 at that time is detected by the sensor 315.

By a loop circuit consisting of the comparator 309, the drive circuit 311, the mode motor cam unit 313 and the sensor 315, a cam angle of the cam 229 is controlled so that it becomes the objective cam angle Ar.

The tape reel drive device 200 outputs the reel driving torque Ty according to the cam angle Ar which is output from the mode motor cam unit 313.

A value of this reel driving torque Ty divided by the take up reel diameter at that time becomes a tape tension

FIGURE 8 is the graph showing the relation between the reel take up diameter and the tape tension in this embodiment. As the reel driving torque has been varied in three stages bordering the take up radii R1,R2, a range of fluctuation in a tape tension is less than the example of conventional unit shown in FIGURE 1.

Thus, according to this embodiment of the present invention, it is possible to control a tape tension even during the fast tape running operation by selecting a proper tape driving torque according to such data as the reel take up diameter, thickness of a tape, etc.

As described above, according to the present invention, it becomes possible to control a tape tension even during the reverse running by selecting a proper driving torque according to a reel take up diameter, thickness of a tape, etc.

As described above, the present invention can provide an extremely preferable tape reel driving apparatus for magnetic tape recorder.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example for the purposes of a divisional application.

**Claims**

1. A tape reel driving apparatus for a magnetic tape recorder comprising a sliding friction coupler provided in a power transmission path from a motor output shaft to a tape reel shaft characterized in that the apparatus further comprises:

   means for detecting a diameter of a tape wound on a tape reel, and

   means for controlling the degree of the power transmission of the sliding friction coupler in response to the diameter of the tape detected by the diameter detecting means.

# FIG.1

TAPE
TENSION

VARIATION
RANGE

0

0   Rmin                                    Rmax

Diameter of tape wound
on take-up reel

# FIG.8

TAPE
TENSION

VARIATION
RANGE

0

0   Rmin        R₁        R₂           Rmax

Diameter of tape wound
on take-up reel

## FIG.2

## FIG.3

FIG.4

EP 0 479 484 A1

FIG. 5

EP 0 479 484 A1

FIG. 6

P3

FIG.7

MICROCOMPUTER 304

SENSOR 301
SENSOR 303

ARITHMETIC CIRCUIT 305  Ir
ARITHMETIC CIRCUIT 307  Ar
COMPARATOR 309
DRIVE CIRCUIT 311
MODE MOTOR CAM UNIT 313
SENSOR 315

MOTOR 19
TAPE REEL DRIVE DEVICE 200
Ty

Ay

# EP 0 479 484 A1

European Patent
Office

## EUROPEAN SEARCH REPORT

Application Number

EP    91 30 8747

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 8, no. 82 (P-268)(1519) 14 April 1984, & JP-A-58 224457 (MATSUSHITA DENKI SANGYO K.K.) 26 December 1983, * the whole document * | 1 | G11B15/43 |
| A | PATENT ABSTRACTS OF JAPAN vol. 7, no. 137 (M-222) 15 June 1983, & JP-A-58 052137 (HAMANA TETSUKOU K.K.) 28 March 1983, * the whole document * | 1 | |
| A | PATENT ABSTRACTS OF JAPAN vol. 10, no. 55 (M-458) 05 March 1986, & JP-A-60 202051 (SATOO K.K.) 12 October 1985, * the whole document * | 1 | |
| A | FR-A-2321168 (BLAUPUNKT-WERKE GMBH) * claims 1, 2; figures 1, 2 * | 1 | |
| A | EP-A-282340 (SONY CORP.) * claims 1, 6-8; figure 3 * | 1 | TECHNICAL FIELDS SEARCHED (Int. Cl.5 ) |
| | | | G11B |

The present search report has been drawn up for all claims

| Place of search | Date of completion of the search | Examiner |
|---|---|---|
| BERLIN | 12 DECEMBER 1991 | BERNAS Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)